# EUROPÄISCHE PATENTANMELDUNG

(11) **EP 1 677 034 A1**
(43) Veröffentlichungstag der Anmeldung: **05.07.2006**
(21) Anmeldenummer: 06006827.7
(22) Anmeldetag: 14.12.2004
(51) Int. Cl.: F16J 15/08

(54) **Dichtung mit Begrenzungsbereich**

(62) Teilanmeldung aus: 04029530.5
(71) Anmelder: Carl Freudenberg KG, 69469 Weinheim (DE)
(72) Erfinder: Fehrecke, Herbert, 69469 Weinheim (DE)

(57) **Zusammenfassung**

Eine Dichtung, umfassend mindestens eine flächige Lage (5) mit mindestens einem Durchgang (6), einen Begrenzungsbereich (7) und einen Dichtungsbereich (8), wobei dem Begrenzungsbereich (7) und dem Dichtungsbereich (8) belastbare Mittel (1) zugeordnet sind, ist im Hinblick auf die Aufgabe, eng beieinander liegende Räume problemlos abzudichten, dadurch gekennzeichnet, dass die belastbaren Mittel (1) den Durchgang (6) spirafförmig umgeben und die belastbaren Mittel (1) Erhebungen (2a, 2b) und Senken (3a, 3b) aufweisen.

## Beschreibung

### Technisches Gebiet

Die Erfindung betrifft eine Dichtung, umfassend mindestens eine flächige Lage mit mindestens einem Durchgang, einen Begrenzungsbereich und einen Dichtungsbereich, wobei dem Begrenzungsbereich und dem Dichtungsbereich belastbare Mittel zugeordnet sind.

### Stand der Technik

Derartige Dichtungen sind bereits aus dem Stand der Technik bekannt. Dabei umfassen gattungsbildende Dichtungen häufig zwei Lagen, wobei eine Lage einen Begrenzungsbereich aufweist, dem belastbare Mittel zugeordnet sind. Die belastbaren Mittel dienen als so genannte Stopper, welche den auf dem Dichtungsbereich wirkenden Anpressdruck begrenzen sollen. Diese Begrenzung des Anpressdruckes ist notwendig, damit die Dichtung im Dichtbereich ihre optimale Wirkung entfalten kann.

Der Begrenzungsbereich ist bei den gattungsbildenden Dichtungen häufig in Form von Kreisen ausgebildet, weiche konzentrisch um einen Durchgang angeordnet sind. Der Durchgang ist dabei beispielsweise Teil eines Kolbenraums, in welchem sich ein Zylinder eines Kraftfahrzeugmotors bewegen kann. Der Begrenzungsbereich wird zusätzlich von einem Dichtungsbereich konzentrisch umgeben.

Bei diesem konstruktiven Aufbau ist nachteilig, dass für eine Dichtungsmaßnahme ein erheblicher Raum beansprucht wird. Ein besonders kompakter Aufbau einer Dichtung, welche erlaubt, mehrere eng nebeneinander liegende Räume zuverlässig zu dichten, ist mit den gattungsbildenden Dichtungen nicht möglich.

### Darstellung der Erfindung

Der Erfindung liegt daher die Aufgabe zugrunde, eine Dichtung der eingangs genannten Art derart auszugestalten und weiter zu bilden, dass eng beieinander liegende Räume problemlos abdichtbar sind. Die vorliegende Erfindung löst die zuvor genannte Aufgabe durch die Merkmale des Patentanspruchs 1. Danach ist eine Dichtung der eingangs genannten Art dadurch gekennzeichnet, dass die belastbaren Mittel den Durchgang spiralförmig umgeben und die belastbaren Mittel Erhebungen und Senken aufweisen.

Erfindungsgemäß ist erkannt worden, dass die Vorkehrung einer Spirale erlaubt, den äußeren Endpunkt einer Spirale nahezu ohne räumlichen Versatz dem Endpunkt einer weiteren Spirale zuzuordnen. Hierdurch ist sicher gestellt, dass im Bereich zwischen zwei Durchgängen eine Anordnung der belastbaren Mittel derart möglich ist, dass der auf die Dichtung wirkende Anpressdruck optimiert auf die gesamte Dichtungsfläche verteilt wird. Dies wird konkret dadurch erreicht, dass die äußere Windung einer ersten Spirale im Bereich zwischen den Durchgängen endet, wobei das Ende einer benachbarten zweiten Spirale nahe dem Ende der ersten Spirale positionierbar ist. Auf raffinierte Weise ist insoweit sicher gestellt, dass eng beieinander liegende Durchgänge bei kompaktem Aufbau der Dichtung problemlos abdichtbar sind. Die Vorkehrung von Erhebungen und Senken ermöglicht das linienförmige Anpressen von Flächen an die belastbaren Mittel, wodurch diese besonders definiert mit Kraft beaufschlagbar sind. Folglich ist die eingangs genannte Aufgabe gelöst.

Die belastbaren Mittel weisen Erhebungen und Senken relativ zur flächigen Basis der Lage auf. Dabei ist insbesondere denkbar, dass die Erhebungen und Senken wellenförmig oder sägezahnförmig ausgestaltet sind. Die Vorkehrung von Erhebungen und Senken ermöglicht das linienförmige Anpressen von Flächen an die belastbaren Mittel, wodurch diese besonders definiert mit Kraft beaufschlagbar sind.

Die belastbaren Mittel könnten in einer einzigen Lage ausgeformt sein. Dabei ist insbesondere denkbar, dass die Dichtung nur aus einer Lage besteht, in welcher die belastbaren Mittel und der Dichtungsbereich ausgeformt sind. Die Lage könnte dabei aus Edelstahl bestehen. Diese konkrete Ausgestaltung hat den Vorteil dass erhebliche Fertigungskosten eingespart werden können, da nur eine Lage verarbeitet werden muss. Des Weiteren ist von Vorteil, dass wirksam Fehler im Aufbau eines Lagenverbundes vermieden werden.

Zwei benachbarte Erhebungen oder Senken bzw. Innenwandungen oder Außenwandungen der Spiralgänge könnten derart miteinander verbunden sein, dass ein zwischen diesen gebildeter Kanal fluiddicht verschließbar ist. Dabei ist insbesondere denkbar, dass in den Gängen der Spirale abdichtende Mittel entweder am Anfang einer Spirale oder in deren Mitte angeordnet sind um die Gänge fluiddicht zu verschließen. Diese konkrete Ausgestaltung erlaubt es, die belastbaren Mittel zugleich als abdichtende Mittel zu verwenden, da die Spirale, welche auf Grund ihrer geometrischen Form stets einen Fluid durchlässigen Kanal zwischen zwei Anpressflächen bildet, wirksam abdichtbar ist. Bei dieser konkreten Ausgestaltung ist denkbar, dass die abdichtenden Mittel in den Kanälen durch Verdickungen der Lage an definierten Stellen realisiert ist. Denkbar ist auch, Einprägungen, Ausstülpungen oder Verdickungen der Lagen oder der Gänge der Spirale vorzusehen, welche abdichtende Zwecke erfüllen.

Die Erhebungen oder Senken könnten in einer Richtung abnehmend ausgestaltet sein. Dabei ist einerseits denkbar, dass die Höhe der Erhebungen bzw. die Tiefe der Senken in Richtung Durchgang zunehmend oder andererseits abnehmend ausgestaltet sind. Diese konkreten Ausgestaltungen haben den Vorteil, dass definierte Bereiche der Spirale für Abdichtungszwecke und andere Bereich für Begrenzung des Anpressdrucks verwendet werden können. Es ist auch denkbar, die Spiralgänge in ihren Ausmaßen zumindest bereichsweise derart zu dimensionieren, dass Kapillareffekte dichtende Bereiche bilden. Dabei könnten Fluide derart in Hohlräumen eingeschlossen sein, dass diese Dichtungswirkungs entfalten.

Die belastbaren Mittel könnten mindestens drei Umläufe definieren. Die Vorkehrung von drei Umläufen ist vor dem Hintergrund einer einfachen Fertigung von Bedeutung. Darüber hinaus stellt die konkrete Ausgestaltung mit drei Umläufen einen Kompromiss zwischen ausreichender Begrenzungswirkung und geringst mögficherAusdehnung der belastbaren Mittel dar. Letzteres ist insbesondere nofinrendig, um eine besondere Kompaktheit der Dichtung zu erhalten.

Die belastbaren Mittel könnten in einer Lage ausgebildet sein, an welche sich mindestens eine weitere Lage anschließt. Dabei ist denkbar, dass die Dichtung sandwichartig aufgebaut ist. Bei dieser konkreten Ausgestaltung sind beidseits der die belastbaren Mittel aufweisenden Lagen angeordnet Hierdurch ist vorteilhaft realisierbar, dass die äußeren Lagen Dichtungsfunktionen wahrnehmen können, wobei die innere Lage Begrenzungsfunktionen wahrnimmt Dabei ist denkbar, dass die unterschiedlichen Lagen aus verschiedenen Materialien bestehen, nämlich die äußeren Lagen aus einem elastischen Material und die innere Lage aus einem starren Material.

In mindestens einer der weiteren Lagen, welche sich an die Lage anschließen, in der die belastbaren Mittel ausgebildet sind, könnte eine Sicke ausgebildet sein. Die Vorkehrung einer Sicke erlaubt die exakte Definierung eines Dichtungsbereichs. Vor diesem Hintergrund ist denkbar, dass die Sicke stufenförmig in einer Lage ausgebildet ist. Die Stufe kann dabei trapezförmig, rechteckig oder halbkreisförmig ausgebildet sein. Denkbar ist auch, dass die Lage, in der die Sicke ausgebildet ist, einen Versatz aufweist, welcher als Sicke fungiert. Diese geometrischen Ausgestaltungen sind fertigungstechnisch einfach zu realisieren.

Die Sicke könnte den Begrenzungsbereich umfänglich umgeben. Diese konkrete Ausgestaltung erlaubt es, den Begrenzungsbereich einzuschließen. Hierdurch ist realisierbar, dass dem Begrenzungsbereich keinerlei Dichtungsfunktionen zukommen muss, Hierdurch ist eine vereinfachte Fertigung des Begrenzungsbereichs mit erhöhter Fehlertoleranzschwelle ermöglicht, da dieser geringfügige Überstände und Unebenheiten aufweisen darf.

Ein Teil des Begrenzungsbereichs könnte als Dichtungsbereich fungieren. Diese konkrete Ausgestaltung ist insbesondere von Vorteil, wenn die Dichtung aus einer einzigen Lage gefertigt ist, in welcher die belastbaren Mittel ausgeprägt sind. Vor diesem Hintergrund ist denkbar, dass im Dichtungsbereich die belastbaren Mittel als Sicke ausgebildet sind oder als dichtende Sicke fungieren, Diese konkrete Ausgestaltung erlaubt einen besonders kompakten Aufbau der Dichtung bei einfacher Fertigung.

Die Sicke könnte als elastische Struktur ausgebildet sein. Dabei ist denkbar, die Lage, in welcher die Sicke ausgebildet ist, aus einem Material zu fertigen, welches besondere elastische Eigenschaften aufweist. Diese Maßnahmen stellen sicher, dass die Sicke bei Druckbeaufschlagung zwischen zwei flächigen Elementen deformiert und eingepresst wird.

Die belastbaren Mittel könnten starr ausgebildet sein. Die starre Ausbildung der belastbaren Mittel stellt sicher, dass zwei flächige Elemente nicht über einen definierten Abstand zusammengepresst werden können.

Die belastbaren Mittel könnten auch flexibel deformierbar ausgestaltet sein. Die belastbaren Mittel dürften bei dieser konkreten Ausgestaltung jedoch nur insoweit flexibel oder elastisch ausgebildet sein, als ein vordefinierten Abstand zwischen zwei flächigen Elementen nicht überschritten wird. Diese Maßnahme ist notwendig, um einer Struktur im Dichtungsbereich einen elastischen Freiheitsgrad zu bewahren der eine optimale Dichtheit sicherstellt.

Es gibt nun verschiedene Möglichkeiten, die Lehre der vorliegenden Erfindung auf vorteilhafte Weise auszugestalten und weiterzubilden. Dazu ist einerseits auf die dem Patentanspruch 1 nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestattungen und Weiterbildungen der Lehre erläutert

### Kurzbeschreibung der Zeichnung

In der Zeichnung zeigen
- Fig. 1: in einer schematischen Ansicht belastbare Mittel in Form einer Spirale,
- Fig. 2: einen Bereich A der Spirale gemäß Fig. 1, in welchem zwei Umläufe durch ein abdichtendes Mittel miteinander verbunden sind,
- Fig. 3: eine flächige Lage mit wellenförmiger Spirale,
- Fig, 4: eine Schnittansicht einer Lage, in welcher eine spiralförmige Struktur aufgeprägt ist,
- Fig. 5: eine Lage mit belastbaren Mitteln, welche von einer Sicke umgeben sind,
- Fig. 6: eine Schnittzeichnung einer zweilagigen Dichtung mit stufenförmiger Sicke,
- fig. 7: eine Schnittzeichnung einer zweilagigen Dichtung mit einer trapezförmigen Sicke und
- Fig. 8: eine Dichtung, welche aus drei Lagen besteht.

### Ausführung der Erfindung

Fig, 1 zeigt in einer schematischen Ansicht belastbare Mittel 1, welche spiralförmig ausgebildet sind.

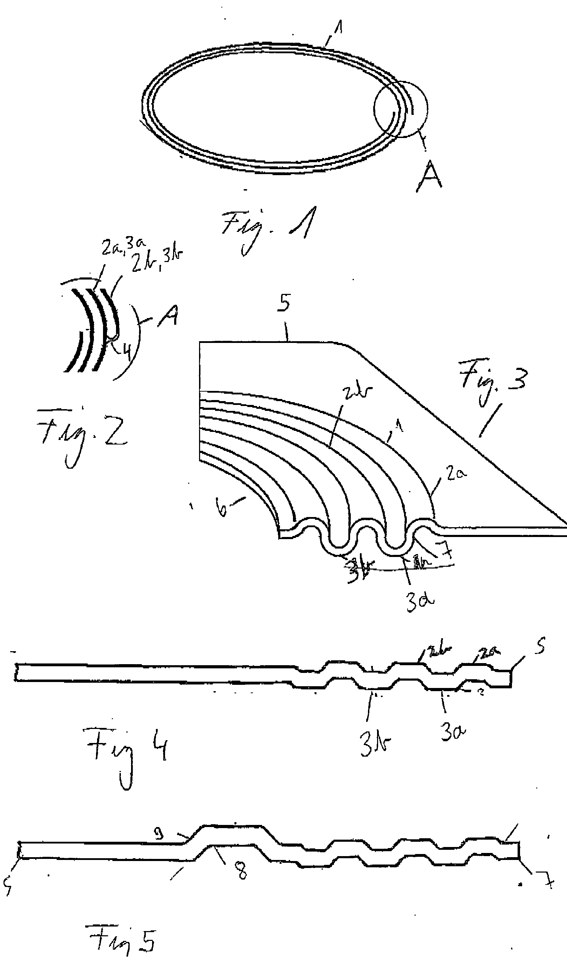

Fig. 2 zeigt zwei benachbarte Erhebungen 2a, 2b oder Senken, 3a, 3b, welche derart miteinander verbunden sind, dass ein zwischen ihnen gebildeter Kanal fluiddicht verschlossen ist. Der Verschluss erfolgt durch ein abdichtendes Mittel 4.

Fig. 3 zeigt eine flächige Lage 5 mit einem Durchgang 6, welcher einen Begrenzungsbereich 7 aufweist, dem belastbare Mittel 1 zugeordnet sind. Die belastbaren Mittel 1 sind in der Lage 5 ausgeformt und weisen Erhebungen 2a, 2b und Senken 3a, 3b auf. Die Erhebungen 2a, 2b und Senken 3a, 3b sind in Richtung des Durchgangs 6 abnehmend ausgestaltet. Die belastbaren Mittel 1 definieren drei Umläufe.

Fig. 4 zeigt die Lage gemäß Fig. 3 in einer Schnittansicht.

Fig. 5 zeigt eine Lage 5, weiche einen Begrenzungsbereich 7 und einen Dichtungsbereich 8 aufweist. Der Dichtungsbereich 8 ist als trapezförmige Sicke 9 ausgestaltet.

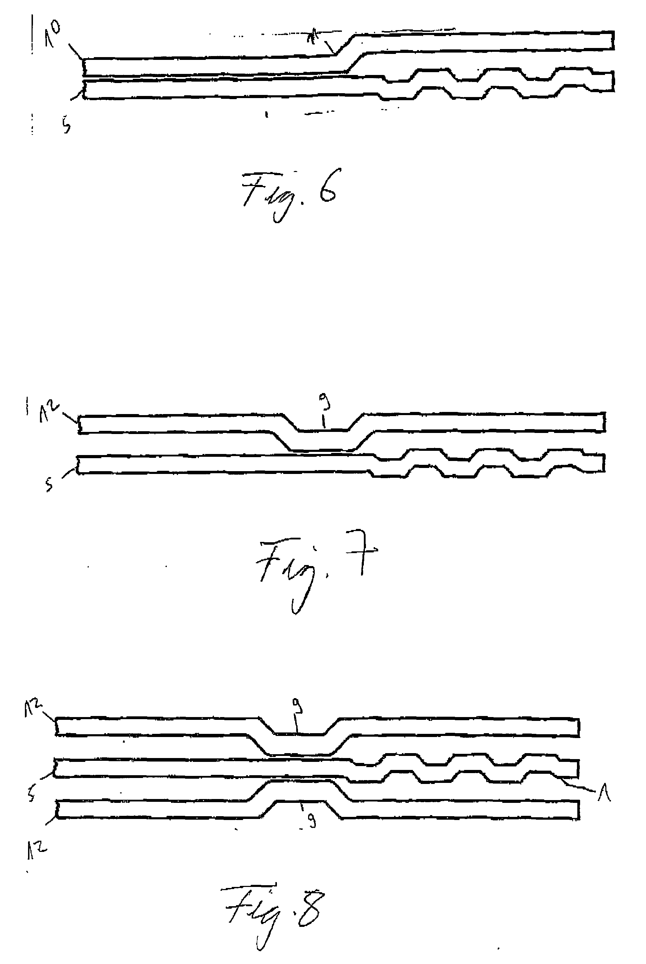

Fig. 6 zeigt eine flächige Lage 5, an welche sich eine weitere Lage 10 anschließt. In der Lage 10 ist eine Sicke 11 ausgebildet, welche durch einen Versatz in der Lage 10 gebildet wird. Dabei sind zwei parallele Ebenen der Lage 10 durch den Versatzbereich voneinander beabstandet ausgebildet.

Fig. 7 zeigt eine Lage 5, an welche sich eine Lage 12 mit einer trapezförmigen Sicke 9 anschließt.

Fig. 8 zeigt eine Lage 5, welche sandwichartig zwischen zwei Lagen 12 mit Sicken 9 eingeschlossen ist. Die Sicken 9 sind als elastische Strukturen ausgebildet wobei die belastbaren Mittel 1 starr oder flexibel ausgebildet sein können. Die Ausgestaltung der Sicken 9 und der belastbaren Mittel 1 im Hinblick auf ihr Deformierbarkeitsverhalten bezieht sich auf alle Sicken und belastbaren Mittel der Figuren 1 bis 8.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Dichtung, umfassend mindestens eine flächige Lage (5) mit mindestens einem Durchgang (6), einen Begrenzungsbereich (7) und einen Dichtungsbereich (8), wobei dem Begrenzungsbereich (7) und dem Dichtungsbereich (8) belastbare Mittel (1) zugeordnet sind,
**dadurch gekennzeichnet, dass**
die belastbaren Mittel (1) den Durchgang (6) spiralförmig umgeben und die belastbaren Mittel (1) Erhebungen (2a, 2b) und Senken (3a, 3b) aufweisen.

2. Dichtung nach Anspruch 1, **dadurch gekennzeichnet, dass** die belastbaren Mittel (1) in einer Lage (5) ausgeformt sind.

3. Dichtung nach einem der Ansprüche 1 oder 2, **dadurch gekennzeichnet, dass** zwei benachbarte Erhebungen (2a, 2b), Senken (3a, 3b), Innenwandungen oder Außenwandungen der Spirale derart miteinander verbunden sind, dass ein zwischen ihnen gebildeter Kanal fluiddicht verschließbar ist.

4. Dichtung nach Anspruch 2 oder 3, **dadurch gekennzeichnet, dass** die Erhebungen (2a, 2b) oder Senken (3a, 3b) in einer Richtung abnehmend ausgestaltet sind.

5. Dichtung nach einem der Ansprüche 1 bis 4, **dadurch gekennzeichnet, dass** die belastbaren Mittel (1) mindestens drei Umläufe definieren.

6. Dichtung nach einem der Ansprüche 1 bis 5, **dadurch gekennzeichnet, dass** die belastbaren Mittel (1) in einer Lage (5) ausgebildet sind, an weiche sich mindestens eine weitere Lage (10,12) anschließt.

7. Dichtung nach einem der Ansprüche 1 bis 6, **dadurch gekennzeichnet, dass** in der weiteren Lage (10,12) im Dichtungsbereich (8) eine Sicke (9, 11) ausgebildet ist.

8. Dichtung nach Anspruch 7, **dadurch gekennzeichnet, dass** die Sicke (9, 11) stufenförmig, nämlich als halbe Sicke, ausgebildet ist.

9. Dichtung nach Anspruch 7 oder 8, **dadurch gekennzeichnet, dass** die Sicke (9, 11) den Begrenzungsbereich (7) umfänglich umgibt.

10. Dichtung nach Anspruch 1 bis 5, **dadurch gekennzeichnet, dass** ein Teil des Begrenzungsbereichs (7) als Dichtungsbereich (8) fungiert.

11. Dichtung nach Anspruch 10, **dadurch gekennzeichnet, dass** im Dichtungsbereich (8) die belastbaren Mittel (1) als Sicke fungieren.

12. Dichtung nach einem der Ansprüche 7 bis 11, **dadurch gekennzeichnet, dass** die Sicke (9, 11) als elastische Struktur ausgebildet ist.

13. Dichtung nach Anspruch 12, **dadurch gekennzeichnet, dass** die belastbaren Mittel (1) starr ausgebildet sind.

14. Dichtung nach Anspruch 12, **dadurch gekennzeichnet, dass** die belastbaren Mittel (1) flexibel deformierbar ausgebildet sind.
